# EUROPÄISCHE PATENTANMELDUNG

(11) **EP 4 779 109 A1**
(43) Veröffentlichungstag der Anmeldung: **22.07.2026**
(21) Anmeldenummer: 25168664.8
(22) Anmeldetag: 04.04.2025
(51) Int. Cl.: E04G 21/32, F16B 45/00

(54) **SICHERHEITSHAKEN ZUM EINHÄNGEN EINES SICHERUNGSNETZES**

(30) Priorität: 17.01.2025 EP 25152690; 22.01.2025 EP 25153439
(71) Anmelder: Albanese, Pino, 8400 Winterthur (CH)
(72) Erfinder: Albanese, Pino, 8400 Winterthur (CH)
(74) Vertreter: Gachnang AG Patentanwälte

(57) **Zusammenfassung**

Die Erfindung betrifft einen Sicherheitshaken (1) zum Einhängen eines Seilabschnitts (2) und sicheren Festhalten eines eingehängten Seilabschnitts (3).

## Beschreibung

Die Erfindung betrifft einen Sicherheitshaken zum Einhängen eines Seilabschnitts und sicheren Festhalten eines eingehängten Seilabschnitts.

Fallschutznetze bzw. Auffangnetze werden beim Erstellen von Bauten als Absturzsicherungen eingesetzt. Dazu müssen die Fallschutznetze über einer Bodenfläche aufgespannt und unter Spannung gehalten und fixiert sein, sodass eine Last, beispielsweise eine Person oder ein Gegenstand, die ins Fallschutznetz fällt vom Fallschutznetz aufgefangen und abgebremst wird.

Das Aufspannen und Fixieren erfolgt typischerweise dadurch, dass Randbereiche des Fallschutznetzes oder Seile des Fallschutznetzes an befestigten Haken in einen aufgespannten Zustand eingehängt werden und im eingehängten Zustand gespannt werden.

Zum Fixieren und Halten eines aufgespannten Fallschutznetzes unter Spannung sind unterschiedliche Haken bzw. Hakensysteme bekannt.

Es ist nun eine Aufgabe der Erfindung einen Haken bereitzustellen, der eine einfache und sichere Befestigung eines Fallschutznetzes ermöglicht und kosteneffizient herstellbar ist.

Die Aufgabe wird gelöst durch einen Sicherheitshaken gemäss den Merkmalen des Anspruchs 1. Die jeweiligen abhängigen Ansprüche betreffen bevorzugte Ausführungsformen des Sicherheitshakens.

Die Erfindung betrifft einen Sicherheitshaken zum Einhängen eines Seilabschnitts und sicheren Festhalten eines eingehängten Seilabschnitts.

Der Sicherheitshaken ist dazu ausgelegt und ausgestaltet, dass ein Aushängen des eingehängten Seilabschnitts, der sich in einer Richtung quer zur Seilaufnahme gespannt erstreckt, eine aktive Manipulation, insbesondere ein Schwenkausrichten, des eingehängten Seilabschnitts in der Seilaufnahme erfordert.

Ein Sicherheitshaken ist ein Haken an welchem eine Schnur, ein Strick oder ein Seil einhängbar ist, wobei die eingehängte Schnur, der eingehängte Strick oder das eingehängte Seil in einem gespannten Zustand gegen ein Aushängen gesichert ist.

Schwenkausrichten bedeutet, dass der eingehängte Seilabschnitt im Bereich der Seilaufnahme so verschwenkt bzw. gedreht werden muss, dass der so verschwenkte bzw. gedrehte Seilabschnitt aus dem Sicherheitshaken aushängbar ist.

Der Seilabschnitt ist ein Seilabschnitt eines Seils, wobei der Seilabschnitt keine freien Enden aufweist.

Ein solches Schwenkausrichten muss gegen die Spannung im Seil erfolgen. Dadurch ist der eingehängte und gespannte Seilabschnitt im Sicherheitshaken sicher gehalten.

Gemäss einer Ausführungsform ist der Sicherheitshaken ein gebogener Stab, insbesondere Rundstab. Der Sicherheitshaken kann ein runder Metallstab sein.

Dies ermöglicht eine effiziente Herstellung des Sicherheitshakens.

Gemäss einer Ausführungsform weist der Sicherheitshaken eine Seilaufnahme zur Aufnahme des Seilabschnitts, und eine Durchführung zur Seilaufnahme hin zum Einhängen des Seilabschnitts, auf und sind die Seilaufnahme und die Durchführung so ausgestaltet und zueinander positioniert und ausgerichtet, dass das Aushängen des eingehängten Seilabschnitts ein Schwenkausrichten des eingehängten Seilabschnitts in der Seilaufnahme erfordert.

D.h. zum Aushängen des eingehängten Seilabschnitts ist der eingehängte Seilabschnitt im Bereich der Seilaufnahme so zu verschwenken bzw. zu drehen, dass der so verschwenkte bzw. gedrehte Seilabschnitt durch die Durchführung führbar und dadurch aushängbar ist.

Der Sicherheitshaken kann ein verschlussloser Sicherheitshaken sein, wobei ein Verschluss ein Element ist, durch das ein Zugang zur Seilaufnahme fest verschliessbar und wieder öffenbar ist.

Die Durchführung ermöglicht so ein effizientes Einhängen des Seilabschnitts und ein sicheres Halten des eingehängten und gespannten Seilabschnitts.

Gemäss einer Ausführungsform weist der Sicherheitshaken einen Rücken zur Befestigung des Sicherheitshakens an einem Halter, und zwei Rückhaltebögen zum Gefangenhalten des eingehängten Seilabschnitts auf und weist die Durchführung zwei Führungselemente zum geführten Einhängen des Seilabschnitts auf.

Die zwei Rückhaltebögen können U-förmig oder V-förmig sein.

Der Rücken, die Rückhaltebögen und die zwei Führungselemente sind jeweils Abschnitte des Sicherheitshakens.

Dadurch ist der Sicherheitshaken flexibel einsetzbar und der eingehängte und gespannte Seilabschnitts sicher im Sicherheitshaken haltbar.

Gemäss einer Ausführungsform ist der Rücken ein länglicher und gerader Abschnitt des Sicherheitshakens, ist jedes der zwei Führungselemente jeweils ein länglicher und gerader Abschnitt des Sicherheitshakens, sind die länglichen geraden Abschnitte räumlich beabstandet zueinander, verbindet einer der zwei Rückhaltebögen ein Ende des Rückens mit einem Ende des einen der zwei Führungselemente, verbindet der andere der zwei Rückhaltebögen das andere Ende des Rückens mit einem Ende des anderen der zwei Führungselemente, sind die konkave Seite des einen der zwei Rückhaltebögen und die konkave Seite des anderen der zwei Rückhaltebögen einander zugewandt, weist jedes der zwei Führungselemente jeweils ein freies Ende auf, und ist die Seilaufnahme durch den Rücken, die zwei Rückhaltebögen und die zwei Führungselemente begrenzt.

Die Führungselemente können sich parallel zueinander, insbesondere und schräg zum Rücken, erstrecken.

Gemäss einer Ausführungsform weist der Rücken in einer Richtung quer zu seiner Längsrichtung eine zweizählige Rotationsachse des Sicherheitshakens auf.

Die zweizählige Rotationsachse ist eine Rotationsachse, die so liegt, dass der Sicherheitshaken durch eine Drehung des Sicherheitshakens um 180° um diese Rotationsachse auf sich selbst abbildbar ist. Die zweimalige Ausführung der Drehung um diese Rotationsachse entspricht einer Drehung des Sicherheitshakens um 360°. Die zweizählige Rotationsachse ist also ein Symmetrieelement. Die zweizählige Rotationsachse kann sich mittig durch den Rücken des Sicherheitshakens erstrecken.

Gemäss einer Ausführungsform sind der Rücken, das eine der zwei Führungselemente, und das andere der zwei Führungselemente, so zueinander angeordnet, dass in einer Normalprojektion jeweils der Mittenachse des Rückens, der Mittenachse des einen der zwei Führungselemente und der Mittenachse des anderen der zwei Führungselemente auf eine Ebene, die sich quer zur zweizähligen Rotationsachse erstreckt, die projizierte Mittenachse des Rückens und die projizierte Mittenachse des einen der zwei Führungselemente einen spitzen Winkel einschliessen und die projizierte Mittenachse des Rückens und die projizierte Mittenachse des anderen der zwei Führungselemente einen spitzen Winkel einschliessen.

Die spitzen Winkel können gleich sein.

Gemäss einer Ausführungsform sind die zwei Führungselemente so zueinander beabstandet, dass der Seilabschnitt zwischen den zwei Führungselementen und entlang der zwei Führungselemente zur Seilaufnahme und in die Seilaufnahme durchführbar sind.

Gemäss einer Ausführungsform weisen in einer Normalprojektion des Sicherheitshakens auf die Ebene, die sich quer zur zweizähligen Rotationsachse erstreckt, zwei Punkte des projizierten Sicherheitshakens, die in Längsrichtung des Rückens den grössten Abstand zueinander aufweisen in einer Richtung quer zur Längsrichtung des Rückens einen Abstand mit der Grösse A von 0 cm < A < 2 cm auf.

Dadurch befinden sich die zwei Rückhaltebögen im Wesentlichen in einer Linie übereinander, sodass der eingehängte und gespannte Seilabschnitt vom Sicherheitshaken sicher haltbar ist.

Gemäss einer Ausführungsform ist eine Normalprojektion des Sicherheitshakens auf eine Ebene, die sich parallel zur zweizähligen Rotationsachse und parallel zur Längsrichtung des Rückens erstreckt, O-förmig.

Gemäss einer Ausführungsform weist jedes der zwei Führungselemente jeweils ein freies Ende auf, wobei das freie Ende des einen der zwei Führungselemente auf einer Seite einer Ebene, die sich quer zur Längsrichtung des Rückens erstreckt und in welcher sich die zweizählige Rotationsachse erstreckt, und beabstandet zu dieser Ebene liegt, und das freie Ende des anderen der zwei Führungselemente auf der anderen Seite dieser Ebene und beabstandet zu dieser Ebene liegt.

**D.h.** der Sicherheitshaken ist C-förmig, wobei sich die beiden offenen Enden des Cs jeweils in einer Richtung schräg zum Rücken beabstandet zueinander und überlappend erstrecken.

Der erfindungsgemässe Sicherheitshaken ist im Folgenden rein beispielhaft anhand konkreter in den Figuren dargestellter Ausführungsformen näher beschrieben. Es zeigen:
- Figur 1: einen Seilabschnitt und einen Sicherheitshaken mit einem eingehängten Seilabschnitt; und
- Figur 2: den Sicherheitshaken aus Figur 1 in einer ersten perspektivischen Aufsicht von vorne auf den Rücken des Sicherheitshakens und einer zweiten perspektivischen Aufsicht von der Seite auf den Rücken des Sicherheitshakens.

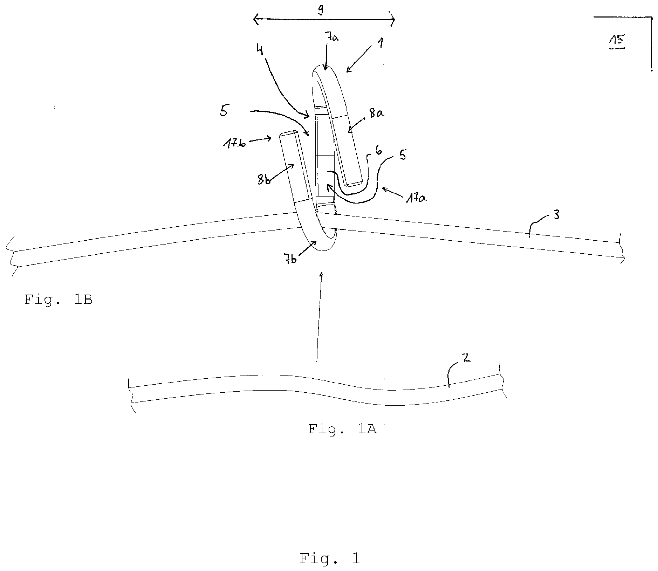

Figur 1 zeigt einen Sicherheitshaken 1 zum Einhängen eines Seilabschnitts 2 und sicheren Festhalten eines eingehängten Seilabschnitts 3.

Figur 1A zeigt einen Seilabschnitt 2 im nicht eingehängten Zustand.

In Figur 1B ist der Sicherheitshaken 1 mit eingehängtem Seilabschnitt 3 gezeigt.

Der Sicherheitshaken 1 ist dazu ausgelegt und ausgestaltet, dass ein Aushängen des eingehängten Seilabschnitts **3,** der sich in einer Richtung 9 quer zur Seilaufnahme 4 gespannt erstreckt, ein Schwenkausrichten des eingehängten Seilabschnitts 3 in der Seilaufnahme 4 erfordert.

Das eingehängte Seil 3 ist im gezeigten gespannten Zustand gegen ein Aushängen gesichert.

Der eingehängte Seilabschnitt 3 ist durch ein Verschwenken **bzw.** Drehen des Seilabschnitts 3 im Bereich der Seilaufnahme 4 aus dem Sicherheitshaken aushängbar.

Dabei muss das Schwenkausrichten gegen die Spannung im Seil erfolgen, weshalb der eingehängte und gespannte Seilabschnitt 3 im Sicherheitshaken 1 sicher gehalten ist.

Der gezeigte Sicherheitshaken 1 ist ein gebogener runder Metallstab.

Der Sicherheitshaken 1 hat eine Seilaufnahme 4 zur Aufnahme des Seilabschnitts 2, und eine Durchführung 5 zur Seilaufnahme 4 hin zum Einhängen des Seilabschnitts 2.

Die Seilaufnahme 4 und die Durchführung 5 sind so ausgestaltet und zueinander positioniert und ausgerichtet, dass das Aushängen des eingehängten Seilabschnitts 3 ein Schwenkausrichten des eingehängten Seilabschnitts 3 in der Seilaufnahme 4 erfordert.

D.h. zum Aushängen des eingehängten Seilabschnitts 3 ist der eingehängte Seilabschnitt 3 im Bereich der Seilaufnahme 4 so zu verschwenken bzw. zu drehen, dass der so verschwenkte bzw. gedrehte Seilabschnitt 3 durch die Durchführung 5 führbar und dadurch aushängbar ist.

Der Sicherheitshaken ist ein verschlussloser Sicherheitshaken.

Die Durchführung 5 ermöglicht ein effizientes Einhängen des Seilabschnitts 2 und ein sicheres Halten des eingehängten und gespannten Seilabschnitts **3.**

Der Sicherheitshaken 1 hat einen Rücken 6 zur Befestigung des Sicherheitshakens 1 an einem Halter, und zwei Rückhaltebögen 7a, 7b zum Gefangenhalten des eingehängten Seilabschnitts **3.**

Die Durchführung 5 hat zwei Führungselemente 8a, 8b zum geführten Einhängen des Seilabschnitts **2.**

Die zwei Rückhaltebögen sind U-förmig.

Der Rücken 5, die Rückhaltebögen 7a, 7b und die zwei Führungselemente 8a, 8b sind jeweils Abschnitte des Sicherheitshakens 1.

Der Rücken 6 ist ein länglicher und gerader Abschnitt des Sicherheitshakens 1.

Jedes der zwei Führungselemente 8a, 8b ist jeweils ein länglicher und gerader Abschnitt des Sicherheitshakens 1.

Die länglichen geraden Abschnitte sind räumlich beabstandet zueinander.

Einer der zwei Rückhaltebögen 7a, 7b verbindet ein Ende des Rückens 6 mit einem Ende des einen der zwei Führungselemente 8a, 8b.

Der andere der zwei Rückhaltebögen 7a, 7b verbindet das andere Ende des Rückens 6 mit einem Ende des anderen der zwei Führungselemente 8a, 8b.

Die konkave Seite des einen der zwei Rückhaltebögen 7a, 7b und die konkave Seite des anderen der zwei Rückhaltebögen 7a, 7b sind einander zugewandt.

Jedes der zwei Führungselemente 8a, 8b hat jeweils ein freies Ende.

Die Seilaufnahme 4 ist durch den Rücken 6, die zwei Rückhaltebögen 7a, 7b und die zwei Führungselemente 8a, 8b begrenzt.

Die Führungselemente 8a, 8b erstrecken sich parallel zueinander und schräg zum Rücken 6.

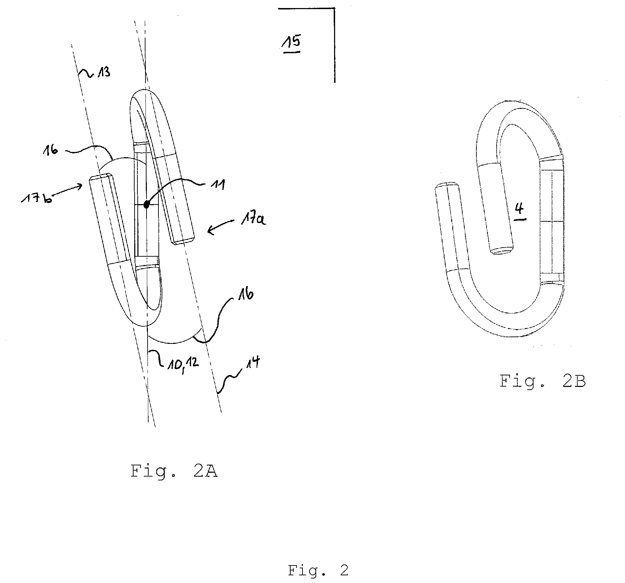

Der Rücken 6 weist in einer Richtung quer zu seiner Längsrichtung 10 eine zweizählige Rotationsachse 11 des Sicherheitshakens 1 auf. Die zweizählige Rotationsachse 11 erstreckt sich quer zur Papierebene, wie in Figur 2A gezeigt.

Der Rücken 6, das eine der zwei Führungselemente 8a, 8b, und das andere der zwei Führungselemente 8a, 8b, sind so zueinander angeordnet, dass in der Normalprojektion jeweils der Mittenachse 12, des Rückens 6, der Mittenachse 13 des einen der zwei Führungselemente 8a, 8b und der Mittenachse 14 des anderen der zwei Führungselemente 8a, 8b auf die Ebene 15, die sich quer zur zweizähligen Rotationsachse 11 erstreckt, die projizierte Mittenachse 12 des Rückens 6 und die projizierte Mittenachse 13 des einen der zwei Führungselemente 8a, 8b einen spitzen Winkel 16 einschliessen und die projizierte Mittenachse 12 des Rückens 6 und die projizierte Mittenachse 13 des anderen der zwei Führungselemente 8a, 8b einen spitzen Winkel 16 einschliessen.

Die zwei Führungselemente 8a, 8b sind so zueinander beabstandet, dass der Seilabschnitt 2 zwischen den zwei

Führungselementen 8a, 8b und entlang der zwei Führungselemente 8a, 8b zur Seilaufnahme 4 und in die Seilaufnahme 4 durchführbar sind.

In der Normalprojektion des Sicherheitshakens 1 auf die Ebene 15, die sich quer zur zweizähligen Rotationsachse 11 erstreckt, weisen zwei Punkte des projizierten Sicherheitshakens 1, die in Längsrichtung 10 des Rückens 6 den grössten Abstand zueinander aufweisen in einer Richtung quer zur Längsrichtung 10 des Rückens 6 einen Abstand mit der Grösse A von 0 cm auf.

Dadurch befinden sich die zwei Rückhaltebögen in einer Linie übereinander, sodass der eingehängte und gespannte Seilabschnitt vom Sicherheitshaken sicher haltbar ist.

Die Normalprojektion des Sicherheitshakens 1 auf eine Ebene, die sich parallel zur zweizähligen Rotationsachse 11 und parallel zur Längsrichtung 10 des Rückens 6 erstreckt ist O-förmig.

Jedes der zwei Führungselemente 8a, 8b weist jeweils ein freies Ende 17a, 17b auf, wobei das freie Ende des einen der zwei Führungselemente 8a, 8b auf einer Seite einer Ebene, die sich quer zur Längsrichtung 10 des Rückens 6 erstreckt und in welcher sich die zweizählige Rotationsachse 11 erstreckt, und beabstandet zu dieser Ebene liegt, und das freie Ende des anderen der zwei Führungselemente 8a, 8b auf der anderen Seite dieser Ebene und beabstandet zu dieser Ebene liegt.

D.h. der Sicherheitshaken ist C-förmig, wobei sich die beiden offenen Enden des Cs jeweils in einer Richtung schräg zum Rücken beabstandet zueinander und überlappend erstrecken.

Gleiche Elemente des Sicherheitshakens 1 sind in Figur 2 gezeigt.

Figur 2 zeigt in Figur 2A den Sicherheitshaken 1 aus Figur 1 in einer ersten perspektivischen Aufsicht von vorne auf den Rücken 6 des Sicherheitshakens 1 und in Figur 2B den Sicherheitshaken 1 aus Figur 1 in einer zweiten perspektivischen Aufsicht von der Seite auf den Rücken 6 des Sicherheitshakens 1.

Gleiche Elemente des Sicherheitshakens 1 sind in Figur 1 gezeigt und zur Figur 1 beschrieben.

## Patentansprüche

1. Sicherheitshaken (1) zum Einhängen eines Seilabschnitts (2) und sicheren Festhalten eines eingehängten Seilabschnitts (3),
wobei
der Sicherheitshaken (1) dazu ausgelegt und ausgestaltet ist, dass ein Aushängen des eingehängten Seilabschnitts (3), der sich in einer Richtung (9) quer zur Seilaufnahme (4) gespannt erstreckt, eine aktive Manipulation, insbesondere ein Schwenkausrichten, des eingehängten Seilabschnitts (3) in der Seilaufnahme (4) erfordert.

2. Sicherheitshaken (1) nach Anspruch 1, wobei der Sicherheitshaken (1) ein gebogener Stab, insbesondere Metallstab, ist.

3. Sicherheitshaken (1) nach einem der Ansprüche 1 bis 2, wobei
o der Sicherheitshaken (1)
o eine Seilaufnahme (4) zur Aufnahme des Seilabschnitts (2), und
o eine Durchführung (5) zur Seilaufnahme (4) hin zum Einhängen des Seilabschnitts (2),
aufweist, und
o die Seilaufnahme (4) und die Durchführung (5) so ausgestaltet und zueinander positioniert und ausgerichtet sind, dass das Aushängen des eingehängten Seilabschnitts (3) ein Schwenkausrichten des eingehängten Seilabschnitts (3) in der Seilaufnahme (4) erfordert.

4. Sicherheitshaken (1) nach einem der Ansprüche 1 bis 3, wobei
∘ der Sicherheitshaken (1)
o einen Rücken (6) zur Befestigung des Sicherheitshakens (1) an einem Halter, und
o zwei Rückhaltebögen (7a, 7b) zum Gefangenhalten des eingehängten Seilabschnitts (3),
aufweist, und
o die Durchführung (5) zwei Führungselemente (8a, 8b) zum geführten Einhängen des Seilabschnitts (2) aufweist.

5. Sicherheitshaken (1) nach Anspruch 4, wobei
o der Rücken (6) ein länglicher und gerader Abschnitt des Sicherheitshakens (1) ist,
o jedes der zwei Führungselemente (8a, 8b) jeweils ein länglicher und gerader Abschnitt des Sicherheitshakens (1) ist,
o die länglichen geraden Abschnitte räumlich beabstandet zueinander sind,
o einer der zwei Rückhaltebögen (7a, 7b) ein Ende des Rückens (6) mit einem Ende des einen der zwei Führungselemente (8a, 8b) verbindet,
o der andere der zwei Rückhaltebögen (7a, 7b) das andere Ende des Rückens (6) mit einem Ende des anderen der zwei Führungselemente (8a, 8b) verbindet,
o die konkave Seite des einen der zwei Rückhaltebögen und die konkave Seite des anderen der zwei Rückhaltebögen einander zugewandt sind,
o jedes der zwei Führungselemente (8a, 8b) jeweils ein freies Ende aufweist, und
o die Seilaufnahme (4) durch den Rücken (6), die zwei Rückhaltebögen (7a, 7b) und die zwei Führungselemente (8a, 8b) begrenzt ist.

6. Sicherheitshaken (1) nach einem der Ansprüche 4 bis 5, wobei der Rücken (6) in einer Richtung quer zu seiner Längsrichtung (10) eine zweizählige Rotationsachse (11) des Sicherheitshakens (1) aufweist.

7. Sicherheitshaken (1) nach Anspruch **6,** wobei
o der Rücken (6),
o das eine der zwei Führungselemente (8a, 8b), und
o das andere der zwei Führungselemente (8a, 8b),
so zueinander angeordnet sind, dass in einer Normalprojektion jeweils der Mittenachse (12) des Rückens (6), der Mittenachse (13) des einen der zwei Führungselemente (8a, 8b) und der Mittenachse (14) des anderen der zwei Führungselemente (8a, 8b) auf eine Ebene (15), die sich quer zur zweizähligen Rotationsachse (11) erstreckt, die projizierte Mittenachse (12) des Rückens (6) und die projizierte Mittenachse (13) des einen der zwei
Führungselemente (8a, 8b) einen spitzen Winkel (16) einschliessen und die projizierte Mittenachse (12) des Rückens (6) und die projizierte Mittenachse (13) des anderen der zwei Führungselemente (8a, 8b) einen spitzen Winkel (16) einschliessen.

8. Sicherheitshaken (1) nach einem der Ansprüche 4 bis **8,** wobei die zwei Führungselemente (8a, 8b) so zueinander beabstandet sind, dass der Seilabschnitt (2) zwischen den zwei Führungselementen (8a, 8b) und entlang der zwei Führungselemente (8a, 8b) zur Seilaufnahme (4) und in die Seilaufnahme (4) durchführbar sind.

9. Sicherheitshaken (1) nach einem der Ansprüche 6 bis **8,** wobei in einer Normalprojektion des Sicherheitshakens (1) auf die Ebene (15), die sich quer zur zweizähligen Rotationsachse (11) erstreckt, zwei Punkte des projizierten Sicherheitshakens (1), die in Längsrichtung (10) des Rückens (6) den grössten Abstand zueinander aufweisen in einer Richtung quer zur Längsrichtung (10) des Rückens (6) einen Abstand mit der Grösse A von 0 cm < A < 1 cm aufweisen.

10. Sicherheitshaken (1) nach einem der Ansprüche 6 bis 9, wobei eine Normalprojektion des Sicherheitshakens (1) auf eine Ebene, die sich parallel zur zweizähligen Rotationsachse (11) und parallel zur Längsrichtung (10) des Rückens (6) erstreckt, O-förmig ist.

11. Sicherheitshaken (1) nach einem der Ansprüche 6 bis 10, wobei
o jedes der zwei Führungselemente (8a, 8b) jeweils ein freies Ende (17a, 17b) aufweist,
o das freie Ende des einen der zwei Führungselemente (8a, 8b) auf einer Seite einer Ebene, die sich quer zur Längsrichtung (10) des Rückens (6) erstreckt und in welcher sich die zweizählige Rotationsachse (11) erstreckt, und beabstandet zu dieser Ebene liegt, und
o das freie Ende des anderen der zwei Führungselemente (8a, 8b) auf der anderen Seite dieser Ebene und beabstandet zu dieser Ebene liegt.
